# EUROPEAN PATENT SPECIFICATION

(11) **EP 0 584 048 B1**
(45) Date of publication and mention of the grant of the patent: **12.06.1996**
(21) Application number: 93830310.4
(22) Date of filing: 20.07.1993
(51) Int. Cl.: C12H 1/06

(54) **Continuous apparatus for the cold stabilisation of tartar in musts, wines and the like**
Vorrichtung zur kontinuierliche Kaltstabilisierung von Tartraten von Mosten und Weinen
Appareil pour la stabilisation au froid en continu des tartrates dans les mouts ou les vins

(30) Priority: 21.07.1992 IT FI920151
(43) Date of publication of application: 23.02.1994
(73) Proprietor: Clementi, Giancarla, I-12060 Barolo, Cueno (IT); Cellerini, Luana, I-50019 Sesto Fiorentino, Firenze (IT)
(72) Inventor: Clementi, Giancarla, I-12060 Barolo, Cueno (IT); Cellerini, Luana, I-50019 Sesto Fiorentino, Firenze (IT)
(74) Representative: Mannucci, Gianfranco, Dott.-Ing.

(56) References cited:
- EP-A- 0 299 597
- DE-A- 3 244 221
- FR-A- 828 463
- FR-A- 975 575
- FR-A- 2 364 270
- FR-A- 2 392 117
- FR-A- 2 470 157

## Description

### DESCRIPTION

The invention relates to an apparatus for the stabilisation of tartar in wine and the like by means of the formation of potassium bitartrate (BTK) crystals.

The apparatus has been designed in order to obtain a high yield in time, the possibility of automation to a greater or lesser degree and a wide flexibility for the treatment of products of even widely variable properties. These and other objects and advantages will become clear from the following text.

Essentially, the apparatus in question for the cold stabilisation of tartar in musts, wines and the like - which comprises refrigeration means suitable for promoting the formation of crystals and microcrystals of ice and crystals of potassium bitartrate, and means for separating off said crystals - is a continuous apparatus which also comprises, characteristically, an acceleration reactor suitable for holding concentrated potassium bitartrate crystals, and a system for circulating the liquid through said reactor and in the apparatus and for by-passing the liquid around said reactor.

Advantageously, the apparatus can comprise instrumentation for monitoring the conductivity of the filtered product and a programming system for effecting a variation in the setting of the circulation in order to assure the required standard for the properties of the product obtained from the filter, with inclusion and exclusion of said reactor and also in order to recycle the product being treated to a lesser or greater degree.

In a possible and advantageous embodiment, the apparatus can comprise in combination:
- an evaporator unit with a cooling jacket having a profile of revolution and a scraper rotor for removing the crystals of ice just formed from the exchange wall of said jacket;
- a crystalliser container for the formation and separation of the microcrystals which tend to settle towards the bottom;
- means for establishing open and closed circulation settings during recirculation, and means for excluding and including said acceleration reactor.

The acceleration reactor can be designed as a conical container with a vertical axis and the vertex turned downwards, in which the liquid enters at the bottom and exits at the top; a by-pass line can extend parallel thereto, with alternately openable control valves.

The apparatus can moreover comprise a recirculation line between the inlet and outlet connections, and valves for alternately closing said recycle line and, respectively, said two connections, in order to obtain a desired recycle rate, with or without the interposition of the acceleration reactor.

The invention will be more clearly understood by following the description and the attached drawing which shows a non-restrictive practical embodiment of the invention. In the drawing:

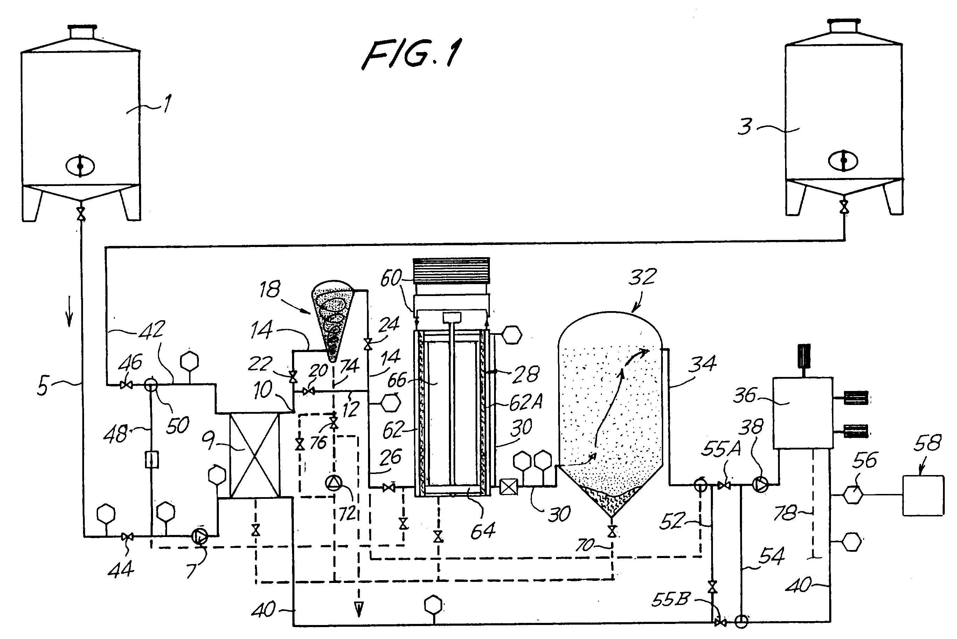

Fig. 1 shows a general circuit diagram of the apparatus and

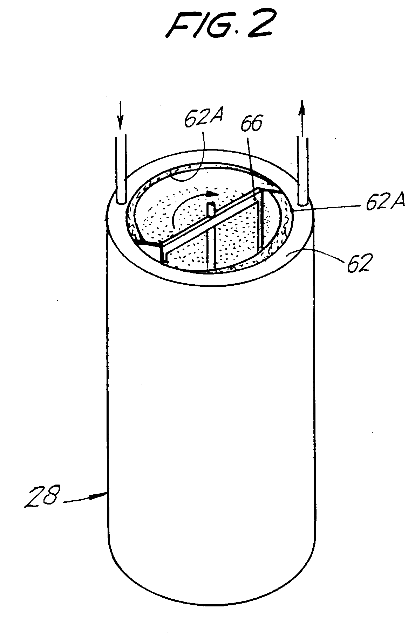

Fig. 2 shows a diagrammatic perspective view of the body of the cooling evaporator.

According to the illustration in the attached drawing, 1 marks a tank for the product to be treated and 3 marks a tank for the treated product. The inlet line 5 for the product to be treated, coming from the container 1, is fitted with a feed and circulation pump 7. The pump delivers the product into a heat exchanger 9, whose outlet 10 is divided into a direct line 12 and a line 14 in which an acceleration reactor 18 is inserted; the line 12 therefore serves to by-pass said crystal acceleration reactor 18; the inclusion or exclusion of this reactor is established by means of at least one valve 20 in the line 12 and at least one valve 22 or 24 or two valves 22 and 24 in the line 14. The liquid which has passed through the heat exchanger 9 is, however, delivered by the pump 7 to the line 26 which leads to an evaporator unit 28. From the latter, the liquid exits through a line 30 to the bottom part of a crystalliser 32, from which the liquid exits through a line 34 leading to a filtration unit 36, optionally and advantageously with the aid of a pump 38. From the filter 36, a line 40 leads to the heat exchanger 9 and continues from the latter as an outlet line 42 to the tank 3 for the treated product. In the lines 5 and 42, valves 44 and 46 respectively are inserted, which can isolate the tanks 1 and 3 respectively from the apparatus, and a recycle line 48 inserted between the two lines 5 and 42 can be provided upstream of the pump 7 and downstream of the valves 44 and 46, in combination with a suitable diverter 50 or other equivalent means.

Further lines 52 and 54 can be arranged as a bypass of the filter 36, for the purpose of emptying the apparatus or parts thereof with the aid of isolation valves 55A, 55B; moreover, the line 52 can exclude operation of the filters.

Connected to the outlet from the filter 36, systems for monitoring the conductivity of the product exiting from the filter can be provided, such as a conductivity meter 56 which serves to govern a programming system indicated diagrammatically by 58 and intended for the functions described in greater detail below.

The evaporator 28 is combined with a cryogenic unit 60 of suitable type, which serves to effect cooling in an evaporation jacket 62, the active inner wall 62A of which represents a heat exchanger with the liquid mass which is fed from the line 26 to a vessel 64 which is reached by the liquid coming from the line 26 and from which the liquid leaves via the line 30; the vessel 64 is a tank having a profile of revolution, whose wall 62A serves as a heat exchanger with the evaporation jacket 62. 66 marks a scraper rotor which can act on the wall 62A to remove the ice formations generated by the refrigeration transmitted via said wall 62A, in order to cause circulation of the incipient ice formations which are transferred to the crystalliser 32 for promoting the initial formation of potassium bitartrate crystals which have grown progressively during the treatment in the crystalliser 32, so that they fall to the bottom of said crystalliser 32, while the liquid, from which more or less all the tartrate has been removed, passes into the line 34 and from there to the filters 36.

Under normal operating conditions, the product is fed from the tank 1 via the line 5 and the pump 7, and it passes through the heat exchanger 9, flows through the line 12 with exclusion of the reactor 18, enters the evaporator 28 and from there - enriched with ice crystals - passes into the crystalliser 32 in which the macrocrystals of potassium tartrate form and separate out; the product is filtered in the filters 36 and returns through the line 40 to the heat exchanger 9 to be directed through the line 42 to the tank 3.

At the start of a cycle, a closed cycle circulation for initial enrichment with bitartrate crystals in the crystalliser 32 is established in order to obtain an autoactivation of the separation, by means of the bitartrate which is obtained from the product being treated; the closed cycle circulation is obtained by opening the line 48 and breaking the connection with the exterior by closing the valves 44 and 46.

If, during normal operation or during operation in a closed cycle - which can occur either at the start or during normal operation for restoring the desired and set conditions - the set conditions of extraction of the tartrate and in particular of sufficiently low conductivity of the treated liquid are not reached or maintained at the correct time, the conductivity meter 56 signals the anomaly and can determine either a transition from normal operation to recycle operation or a transition from normal operation or recycle operation to operation with accelerated enrichment by putting the acceleration reactor 18 into operation. This is obtained by means of the programming device 58 with opening of the valves 22 and 24 and closure of the valve 20 and thus by passing the liquid through the reactor 18, which can be a conical reactor containing pure and cleaned potassium bitartrate crystals, which crystals can represent a primer for accelerating the formation of the potassium bitartrate macrocrystals, whereby the apparatus is rapidly brought back to normal operating conditions, which can be detected by the sensors such as 56 and/or other equivalent means and which can lead to a restoration of normal conditions by means of the programming device 58.

The bitartrate which is formed can be eliminated from the bottom of the crystalliser 32 through, for example, a line 70 with a pump 72 for removing the bitartrate from the apparatus or for feeding the bitartrate to the acceleration reactor 18 via a route 74 controlled by a valve 76. A discharge 78 can be provided for removal from the filters 36.

The apparatus can also be advantageously provided with systems for emptying the various containers, when it is necessary to start a treatment with products different from those previously treated.

In conclusion, by measuring the electrical conductivity of the wine by 56 or in another equivalent way, the stability which must correspond to a standard set by the programming is obtained. If this stability is not reached, the apparatus does not allow the valves 46 and 44 to be opened and thereby prevents the wine from returning to the cellar and recycles the wine being treated. Should even the recycle be prolonged beyond a preset period of time; opening of the valves 22 and 24 occurs automatically, that is to say the acceleration reactor 18 is inserted into the cycle, which intervenes by causing the wine to come into contact with the crystals contained in said reactor, in order to restore the wine rapidly to its desired condition of stable tartrate content, in order thus to cause reopening of the valves so that the wine returns to the cellar, with normal operation re-established.

The process is also defined by three-fold contact with bitartrate and/or pilot crystal, so that there is:
- a first contact in the evaporator 28,
- a second contact in the crystalliser 32 and
- a third contact in the crystallisation accelerator 18; at least this third contact is controlled by the conductivity meter 56.

It is to be understood that the drawing shows only one embodiment, given solely as a practical demonstration of the invention, which can be varied in its forms and arrangements without thereby departing from the scope of the concept which is the basis of the invention itself. Any reference numbers in the attended claims are intended to facilitate reading of the claims with reference to the description and to the drawing, and do not restrict the scope of protection represented by the claims.

## Claims

1. Continuous apparatus for the cold stabilisation of tartar in musts, wines and the like, containing refrigeration means suitable for promoting the formation of crystals and microcrystals of ice and crystals of potassium bitartrate, and means for separating off said crystals, characterised in that it comprises an acceleration reactor (18) suitable for holding concentrated potassium bitartrate crystals, and a system for circulating the liquid through said reactor and in the apparatus and for by-passing the liquid around said reactor.

2. Apparatus according to Claim 1, characterised in that it contains instrumentation (56) for monitoring the conductivity of the filtered product and a programming system (58) for effecting a variation in the setting of the circulation in order to assure a return to the required standard for the properties of the product obtained from the filter, with inclusion and exclusion of said reactor (18) and/or with or without recycling of the liquid being treated.

3. Apparatus according to Claim 1 or 2, characterised in that it comprises, in combination: an evaporator unit (28) with a cooling jacket (62) having a profile of revolution and a scraper rotor (66) for removing the crystals from the exchange wall (62A) of said jacket (62); a crystalliser container (32) for the formation and separation of macrocrystals by decanting, in which the product rises up slowly and the crystals and macrocrystals tend to settle towards the bottom; filtration means (36) for removing residual crystals from the product; an acceleration reactor (18) for accelerating the formation of crystals; means for establishing open and closed circulation schemes with a by-pass system (12; 20) for excluding and including said acceleration reactor (18).

4. Apparatus according to Claim 1 or 3, characterised in that the acceleration reactor (18) is designed as a conical container with a vertical axis and the vertex turned downwards, in which the liquid enters at the bottom and exits at the top, a by-pass line (12) extending parallel thereto, with alternately openable control valves (20; 22, 24).

5. Apparatus according to Claim 1 or 3, characterised in that it comprises a recirculation line (48) between the inlet (5) and outlet (42) connections, and valves (50; 44, 46) for alternately closing said recirculation line (48) and, respectively, said two connections (5; 42).

6. Process for the stabilisation of tartar, using the apparatus according to one of the preceding claims, characterised in that it comprises the possibility of: a first contact with bitartrate in a cooling and ice-forming unit, of a second contact in a crystalliser, and of a third contact in an accelerator containing active crystals; and a programming device for utilising said contacts as a function of the conductivity detected.

## Patentansprüche

1. Kontinuierliche Anlage für die Kältestabilisierung von Weinstein in Mosten, Weinen und Ahnlichem, die die Bildung von Eiskristallen, Mikroeiskristallen und Potassium Bitartratkristallen unterstützende, kälteerzeugende Mittel aufweist, sowie Mittel um besagte Kristalle abzusondern, dadurch gekennzeichnet, daß sie einen Beschleunigungsreaktor (18), der geeignet ist, um konzentrierte Potassium Bitartratkristalle zu erhalten, und ein System aufweist, das die Flüssigkeit durch besagten Reaktor hindurch und in die Anlage laufen läßt, beziehungsweise die Flüssigkeit um besagten Reaktor herum leitet.

2. Anlage gemäß Anspruch 1, dadurch gekennzeichnet, daß sie Instrumente (56) um die Leitfähigkeit des filtrierten Erzuegnisses zu kontrollieren, und ein Programmierungssystem (58) aufweist, das die Einstellung der Zirkulation variieren kann, um sicherzustellen, daß die Eigenschaften des filtrierten Erzeugnisses den Normen entsprechen, mit Einschliessung und Ausschliessung besagten Reaktors (18) und/oder mit oder ohne Ruckströmung der behandelten Flüssigkeit.

3. Anlage gemäß Anspruch 1 oder 2, dadurch gekennzeichnet, daß sie, kombiniert, folgendes enthält: ein mit einem Kühlmantel (62) versehener Verdampfer (28), der ein Rotationsprofil und einen rotationenden Schaber (66) aufweist, um die Kristalle von der Austauschwand (62A) des besagten Mantels (62) zu entfernen; ein Kristallisator-Gemäß (32) für die Bildung und Absonderung von Makrokristallen durch Dekantieren, in dem das Erzeugnis langsam emportsteigt und die Kristalle und Makrokristalle dazu neigen, sich nach unten abzusetzen; Filtriermittel (36) um die restlichen Kristalle aus dem Erzeugnis zu entfernen; einen Beschleunigungsreaktor (18) um die Bildung von Kristallen zu beschleunigen; Mittel um offene und geschlossene Zirkulationspläne herzustellen, mit einem Umleitungssystem (12; 20) um besagten Beschleunigungsreaktor (18) einzuschalten und auszuschalten.

4. Anlage gemäß Auspruch 1 oder 3, dadurch gekennzeichnet, daß der Beschleunigungsreaktor (18) in der Form eines konischen, eine vertikale Achse und nach unten gerichtete Spitze aufweisenden Behälters ausgeführt ist, in den die Flüssigkeit an der unteren Seite hineingeht und an der oberen Seite herauskommt, wobei eine dazu parallelverlaufende Umleitungslinie (12) angeordnet ist mit Kontrollventilen (20, 22, 24), die abwechselnd geöffnet werden können (20; 22, 24).

5. Anlage gemäß Anspruch 1 oder 3, dadurch gekennzeichnet, daß sie eine Rückströmungsleitung (48) zwischen Einlass- (5) und Auslassverbindungsstück (42) und Ventile (50; 44, 46) aufweist, um abwechselnd besagte Rückströmungsleitung (48) beziehungsweise besagte zwei Verbindungsstücken (5; 42) zu schliessen.

6. Verfahren für die Weinsteinstabilisierung mittels der Anlage gemäß einem der obergenannten Ansprüchen, dadurch gekennzeichnet, daß es die Möglichkeit bietet von: einem ersten Kontakt mit Bitartrat in einer Kühlungs- und Gefriereinheit; einem zweiten Kontakt in einem Kristallisationsgefäß; und einem dritten Kontakt in einem Beschleuniger, der aktive Kristalle enthält; sowie eine Programmierung um besagte Kontakte in Funktion der wahrgenommenen Leitfähigkeit zu nutzen.

## Revendications

1. Installation en continu pour la stabilisation à froid de tartre dans les moûts, les vins et semblables, contenant des systèmes de réfrigération capables de promouvoir la formation de cristaux et de microcristaux de glace et de cristaux de bitartrate de potassium et des systèmes capables de séparer ces cristaux, caractérisée par le fait de comprendre un réacteur d'accélération (18) capable de retenir le cristaux concentrés de bitartrate de potassium, et un système pour faire circuler le liquide à travers ledit réacteur et dans l'installation et pour dévier le liquide autour de ce réacteur.

2. Installation, en accord avec la revendication 1, caractérisée par le fait de comprendre un appareillage (56) pour le monitorage de la conductivité du produit filtré et un système de programmation (58) pour effectuer des variations dans la mise au point de la circulation afin d'assurer le retour au standard requis des propriétés du produit obtenu après filtrage, avec inclusion et exclusion dudit réacteur (18) et/ou avec ou sans recyclage du liquide traité.

3. Installation, en accord avec la revendication 1 ou 2, caractérisée par le fait de comprendre, en combinaison: une unité d'évaporation (28) avec un manchon de refroidissement (62) qui a un profil de revolution, et un rotor de rasage (66) pour enlever les cristaux de la paroi d'échange (62A) du dit manchon (62); un conteneur cristallisir (32) pour la formation et la séparation de macro-cristaux par décantation, dans lequel le produit remonte lentement et les cristaux et macro-cristaux tendent à sédimenter vers le fond; des moyens de filtrage (36) pour enlever les cristaux résiduels du produit; un réacteur d'accélération (18) pour accélérer la formation de cristaux; des moyens pour établir l'ouverture ou la fermeture de plans de circulation par un système de by-pass (12, 20) pour inclure ou exclure ledit réacteur d'accélération (18).

4. Installation, en accord avec la revendication 1 ou 3, caractérisée par le fait que le réacteur d'accélération est projeté comme un conteneur conique avec un axe vertical et le sommet dirigé vers le bas, dans lequel le liquide entre par le fond et sort vers le haut, une ligne by-pass (12) étant prévue en parallèle, avec des soupapes de contrôle ouvrables alternativement (20, 22, 24).

5. Installation, en accord avec la revendication 1 ou 3, caratérisée par le fait de comprendre une ligne de re-circulation (48) entre les branchements d'entrée (5) et de sortie (42), et des soupapes (50, 44, 46) pour fermer alternativement ladite ligne de re-circulation (48) et respectivement lesdits deux branchements (5, 42).

6. Procédé pour la stabilisation du tartre, utilisé avec une installation en accord avec une des revendications précédentes, caractérisé par le fait de comprendre la possibilité d'un premier contact avec le bitartrate dans une unité de réfrigération et de formation de glace, d'un deuxième contact dans un cristallisoir et d'un troisième contact dans un accélérateur contenant des cristaux actifs; et une programmation pour utiliser ces contacts comme une fonction du relèvement de la conductivité.
